# EUROPEAN PATENT APPLICATION

(11) **EP 1 640 940 A2**
(43) Date of publication of application: **29.03.2006**
(21) Application number: 05255833.5
(22) Date of filing: 21.09.2005
(51) Int. Cl.: G09B 23/28

(54) **Endoscopy training simulator with multiplexed data transmission**

(30) Priority: 22.09.2004 GB 0421097
(71) Applicant: KeyMed (Medical & Industrial EqupmentT) Ltd, Southend-on-Sea Essex SS2 5QH (GB)
(72) Inventor: Cormack, John George, Chelmsford, Essex CM2 6RG (GB); White, William John, Hockley, Essex SS5 5DD (GB)
(74) Representative: Palmer, Jonathan R.

(57) **Abstract**

There is disclosed an endoscopy training simulator in which data connections passing through the umbilical linking the control body and the base unit are multiplexed over one or more shared transmission lines. The umbilical and a connected angulation control unit may be unplugged from the base unit. On the control body a dummy fluid control is provided using a non-contact electrical sensor such as a Hall effect sensor.

## Description

The present invention relates to an endoscopy training simulator and to an endoscope control body for use in such a simulator.

An endoscope typically comprises a patient insertion tube for insertion into a body lumen and a control body for use by a clinician to control the insertion tube. The control body may be used to control functions such as insertion tube stiffness, supply of air, water and vacuum to the insertion tube tip. Rotation and insertion depth of the insertion tube into the body lumen are usually controlled directly by grasping and manipulating the insertion tube. Air, water and vacuum are generally supplied from a base unit to the control body along an umbilical cable, or umbilical. Visual information obtained at the insertion tube tip is generally passed from the control body to the base unit along the same umbilical, either along a fibre optic bundle or as an electrical video signal.

To assist progress along a body lumen, it is usual for the tip of an endoscope insertion tube to be directable using one or more angulation controls provided on the control body. These controls are coupled to cables which extend along the insertion tube and are anchored near the tip. Rotation of the controls produces corresponding displacement of the cables and hence angulation of the tip. Usually, four cables are used, to provide both an up/down movement and a left/right movement of the tip. Resistance to tip angulation is felt by the user through the controls.

A simulator that simulates an endoscopic procedure without needing a human or animal subject is disclosed in GB-A-2252656. A dummy insertion tube is insertable into a base unit fixture which includes a sensor mechanism to sense longitudinal and rotational movement of the insertion tube. Data describing the sensed movement is fed to a computer which derives appropriate force feedback control data on the basis of a computer model implemented in software. The corresponding force feedback applied to the insertion tube is synchronized with a computer generated visual representation of the procedure as would be seen from the tip of a real endoscope, so as to provide a realistic simulation and a useful clinical training tool.

In such an endoscopy simulator there is no need for the angulation controls to provide actual angulation of the tip of the dummy insertion tube. Instead, the angulation cables may be passed from the control body in a reverse direction, along the umbilical to the base unit, as disclosed in WO 03/058583. This document teaches winding the ends of the cables at the base unit around motors which generate a variable force to simulate resistance to tip angulation.

Developments of this idea are disclosed in PCT/GB03/003106 and GB 0329521.9, in which the angulation cables are also rerouted along the umbilical.

As in real clinical endoscopy, a person using an endoscopy simulator will often rotate the control body a number of times in order to guide the tip of the insertion tube along the body lumen. As a consequence, the umbilical can become severely twisted. This twisting and other deformations can affect the operation of the simulator angulation cables, reducing the realism of the simulation.

This problem is aggravated by the many other services which may need to pass along the simulator umbilical, such as an air tube and electrical wires connected to sensors in the control body. To make the simulator as realistic as possible, these services must be packed into a very small cross section.

To facilitate untwisting of the patient insertion tube and umbilical during a real procedure, the clinician may sometimes disconnect the endoscope from the base unit. This is difficult to achieve in a simulator because of the extra connections, such as angulation cables, between the control body and base unit.

At the control body itself it is important for the various dummy controls, such as the angulation controls, and controls which in a real endoscope would control fluid flow along the insertion tube, to feel as realistic as possible. The fluid controls may, in a real endoscope, control flow of air and water and provide vacuum at the insertion tube tip. Although conventional electrical micro switches can provide reliable operation of the dummy fluid controls, the feel to the user is likely to be unrealistic.

The invention addresses these and other problems of the related prior art.

Accordingly, the invention provides an endoscopy training simulator comprising:
an endoscope control body attached or attachable to a dummy insertion tube, the control body including a plurality of control body electrical devices;
a base unit; and
an umbilical for carrying services between the control body and the base unit, said services including a plurality of data connections with said electrical devices,
characterised in that said data connections are multiplexed, at least in the umbilical, over one or more shared transmission lines passing along the umbilical.

By multiplexing the data connections over one or more common or shared transmission lines, such as electrical wires or optical fibres, the limited space within the umbilical can be used more effectively. In particular, the control body preferably includes angulation control means, which would, in a real endoscope, drive angulation cables passing along a real insertion tube to control the direction of the tube tip, but which in the simulator drive corresponding angulation cables which instead pass along the umbilical to an angulation control unit, providing force feedback, in the base unit. To provide a realistic simulation the umbilical needs to be realistically flexible, and carefully adapted to allow free movement of the angulation cables despite twisting and deformation. These characteristics are improved by multiplexing the electrical data connections to provide more space in the umbilical.

The multiplexing of the logical data connections also simplifies, and reduces in size the high reliability connector likely to be required between the umbilical and the base unit. Preferably, the umbilical is fixedly or permanently attached to the angulation control unit, but the angulation control unit is removeably attached to, or unpluggable from, the rest of the base unit. In this way, the umbilical along with the angulation control unit can be detached by a user from the rest of the base unit, for example to untwist the umbilical, without needing mechanically complex connections between the umbilical and angulation control unit.

The invention also aids the provision of other services along the umbilical, such as an air line to the control body.

The control body preferably comprises a control body multiplexer arranged to receive data from the electrical devices in the control body and to transmit the data over the one or more shared transmission lines. The electrical devices may include sensors or switches associated with a dummy air/water valve which in a real endoscope would control the supply of air and water to the endoscope tip, with a similar dummy suction valve, and sensors or switches associated with other devices such as an instrument insertion port and so on.

The data from the control body are preferably forwarded, via the umbilical, to a processing unit having a multiplex/demultiplex facility. Other elements of the simulator, such as a force feedback unit to detect movement of and provide feedback to the dummy insertion tube, also preferably have multiplex/demultiplex facilities. These facilities may be provided by a plurality of programmable logic devices, and may be connected by one or more serial data lines for transmission of the required data.

The invention also provides a control body for an endoscopy training simulator, the control body being connected to or for connection with a dummy insertion tube, comprising:
a dummy fluid control for the simulation of controlling a fluid flow along the dummy insertion tube; and
a proximity or non-contact electrical sensor arranged to detect an action of the dummy fluid control. The non-contact, or proximity type sensor is preferably a Hall effect sensor arranged to detect relative movement of a magnet, caused by action of the dummy fluid control. The dummy fluid control may be a dummy suction control, a dummy air/water control, or both may be provided. To improve the realism of the simulator, air may be provided to the air/water control and expelled from a thumbhole provided therein.

Embodiments of the invention will now be described, by way of example only, with reference to the accompanying drawings, of which:
figure 1 shows, schematically, an endoscopy simulator embodying the invention;
figure 2 illustrates in more detail the dummy endoscope control body of figure 1;
figure 3 shows, schematically, electrical devices contained in the control body of figure 2;
figure 4 illustrates connections to programmable logic devices installed in the control body and other elements of the simulator of figure 1;
figure 5 shows an example of signalling from the processing unit 30 to the angulation control unit 22 of figure 1; and
figure 6 shows an example of signalling from the control body 14 to the processing unit 30 of figure 1.

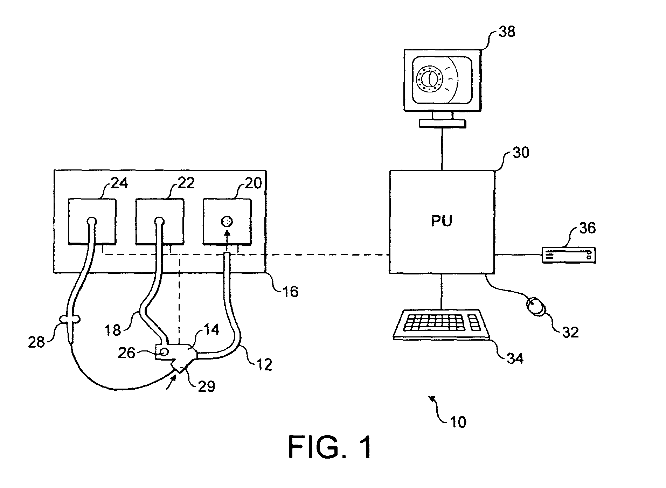

Referring to figure 1 there is shown, schematically, an endoscopy simulator 10 embodying the invention. A dummy patient insertion tube 12 extends from an endoscope control body 14 which is in turn linked to a base unit 16 by a services cable, referred to herein as an umbilical 18. The umbilical, control body and insertion tube are intended to have a look, feel and behaviour which mimics the attributes of a corresponding real clinical endoscope as closely as possible. In particular, the insertion tube should have the correct stiffness, weight and dimension characteristics, the control body should look and feel much the same as a real endoscope control body, and the umbilical should be of an appropriate length, thickness and flexibility.

The base unit incorporates a force feedback unit 20, an angulation control unit 22 and a dummy instrument control unit 24. The dummy instrument control unit 24 may be incorporated in the force feedback unit 20. In use, the insertion tube 12 is inserted into an aperture in the force feedback unit 20 which comprises sensors to measure rotational and longitudinal movement of the insertion tube and actuators to provide appropriate force feedback on the insertion tube.

Angulation controls 26 on the control body 14 act on cables which run along the length of the umbilical 18 and are coupled to sensors and force feedback motors in the angulation control unit 22. The umbilical also carries electrical signals from electrical devices in the control body to the base unit 16 and an air line to carry air from the base unit to the control body.

The simulator preferably enables a user to unplug the umbilical from the base unit, for example to untwist the umbilical during a simulated procedure. This is achieved by connecting the umbilical into the angulation control unit in a permanent manner, but allowing the angulation control unit to be unplugged by a user from the rest of the base unit. The mechanical connections of the cables into the angulation control unit are therefore unaffected by unplugging of the umbilical from the base unit.

One or more dummy instruments 28 may be provided, having elongated elements for insertion into the dummy insertion tube 12 through a port 29 in the control body 14. The dummy instrument 28, which may be used to simulate procedures such as a biopsy or polypectomy is connected to the dummy instrument control unit by a cable which carries data from one or more switches or other sensors, as required, on the dummy instrument.

A network of electrical connections, illustrated in figure 1 by broken lines, carries data between sensors and actuators in the control body 14, the dummy instrument 28, the base unit 16 and a processing unit (PU) 30. The PU may be coupled to conventional peripherals such as a mouse 32, keyboard 34 and removable storage media device 36, and is preferably provided by a conventional computer system having one or more microprocessors, suitable input/output ports and volatile memory.

The PU executes software which implements an endoscopy model to provide a realistic force feedback output in response to the data obtained over the network from the various sensors, and also to provide a simulated endoscopic visual output on a visual display unit 38 provided by the endoscopy model.

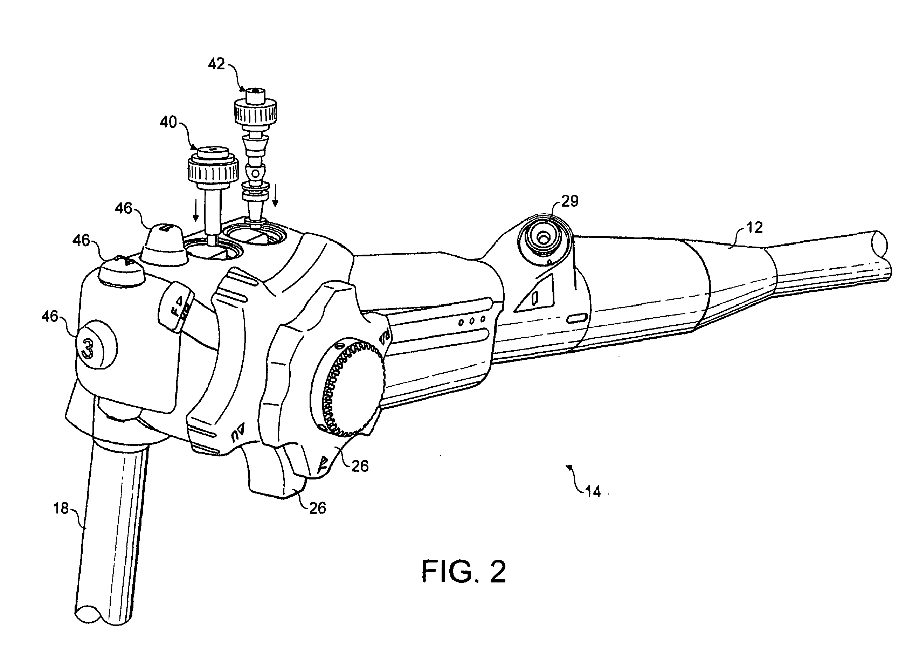

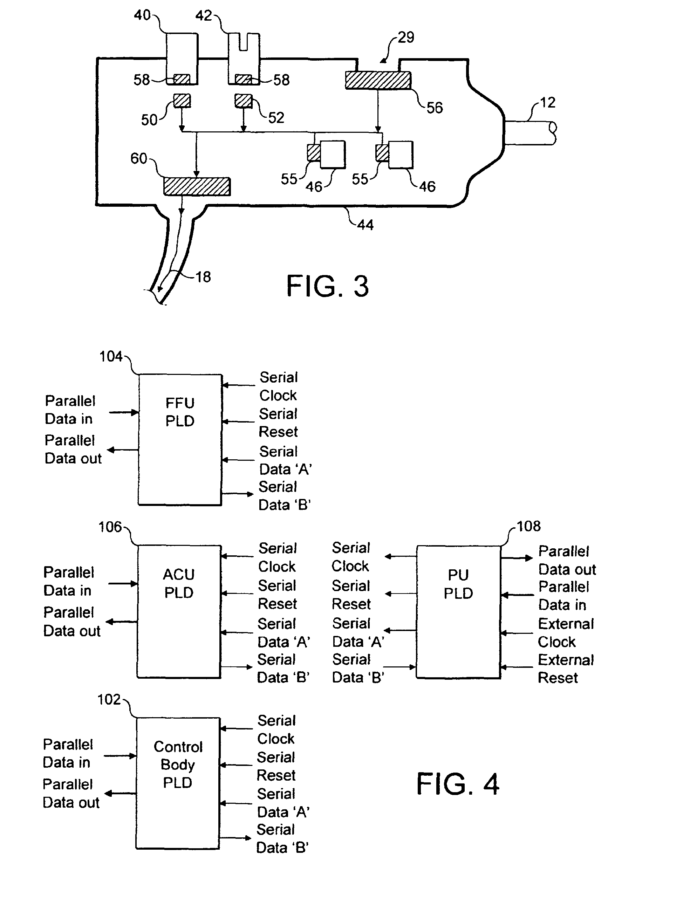

Figure 2 illustrates the dummy endoscope control body 14 of figure 1 in more detail. In addition to the angulation controls 26 discussed above, the body also provides a dummy suction control 40, a dummy air/water control 42 and user buttons 46. Electrical aspects of the control body 14 are further illustrated in figure 3. The position of the dummy suction control 40 is sensed by a suction control sensor 50. The position of the dummy air/water control 42 is sensed by an air/water control sensor 52. The position of the user buttons 46 are sensed by user button sensors 55. Finally, an insertion position sensor 56 detects the degree of insertion, the movement or another appropriate parameter of the insertion of the dummy instrument 28 into the dummy instrument port 29.

The various sensors may be appropriate types of switches, potentiometers and so on. To provide a realistic feel to the action of the dummy suction control and/or the dummy air/water control, while maintaining a robust and hardwearing design, proximity or other non-contact switches are preferably used. In particular, Hall effect sensors may be used, with corresponding magnets 58 being provided on moving parts of the dummy controls 40, 42. In this way, the same fluid controls as used in a real endoscope may be used in the simulator, by incorporation of small magnets at appropriate locations such as at the base of each fluid valve plunger, and Hall Effect sensors positioned close to the base, but externally of the fluid controls.

The sensors in the control body are electrically coupled to a multiplex element 60. The data gathered from the sensors is multiplexed by this element and transmitted along common electrical conductors which pass along the umbilical 18 to the base unit 16, and from there to the processing unit 30. In this way, the number of electrical signal wires required in the umbilical 18 is reduced, thereby allowing more freedom of movement of the angulation control cables in the umbilical, especially when the umbilical becomes twisted or otherwise distorted during use. The size and complexity of the high reliability connector used to removeably connect the umbilical and angulation control unit into the rest of the base unit can also be reduced.

Multiplex/demultiplex elements are similarly provided at the angulation control unit 22, the force feedback unit 20 and the processing unit 30 and the electrical signals there between carried multiplexed over the network connections. A multiplex element may also be provided, if required, at the dummy instrument control unit 24 and/or in the dummy instrument 28 itself.

Some examples of data that may be required for transmission between the PU 30 and other elements of the simulator are set out below:
- Dummy instrument insertion position
- Dummy air/water control status
- Dummy suction control status
- Endoscope user button status
- Standby switch status
- Incremental angulation control position
- Absolute angulation control position
- Angulation control unit EEPROM data
- Angulation control unit over-temperature
- Angulation control unit connection status
- Dummy instrument grip position
- Dummy instrument connection status
- Diathermy footswitch status
- Insertion tube insertion position
- Insertion tube twist position
- Insertion/twist over-drive fault
- Force-feedback unit EEPROM data
- Force-feedback unit over-temperature
- Force-feedback unit connection status
- Angulation control force-feedback
- Insertion tube insertion resistance
- Over-drive fault reset
- Insertion tube torque force-feedback
- Dummy instrument grip resistance
- Air pump control
- Height adjustment
- Hardware enable

In a preferred embodiment the multiplex and multiplex/demultiplex elements are provided by programmable logic devices (PLDs). As an example, an Altera Cyclone field programmable gate array on a PCI card may be used by the processing unit, and Altera MAX3000A complex PLD devices may be used in the control body, force feedback unit and angulation control unit. The devices may be programmed using VHDL (Very High Speed Integrated Circuit Hardware Description Language). As illustrated in figure 4, a separate PLD is preferably used in each of four locations, thus providing a control body PLD 102, a force feedback unit PLD 104, an angulation control unit PLD 106 and a PU PLD 108. Each PLD has parallel data in and parallel data out lines, for connection to the various sensors, actuators and PU input/output ports, and two serial data line connections, labelled 'A' and 'B' for transmission and reception of data bits to and from other PLDs. The PU PLD is the master PLD. The PU PLD generates a serial clock signal synchronized to an external clock, and a serial reset signal based on an external reset. The external reset input to the PU PLD 108 resets the counters located in that device so that they commence counting at a known value. The serial reset signal resets selected counters in all the PLDs, so as to synchronize these counters.

Each line of the parallel data in bus to the PU PLD is allocated a unique address value. The rising edge of the serial clock signal causes address counter values in each PLD to increment, so that each address is polled in turn. When the address counter at a PLD matches the address allocated to a data source connected to one of the connected parallel data in lines, the data read from that line is asserted on the serial data out line of the PLD. Likewise, when the address counter at a PLD matches the address allocated to one of the connected parallel data out lines, the data read from the serial in line of the PLD is asserted on the appropriate data out line.

For example, the PU PLD parallel in data intended for transmission to the ACU PLD 106 could be addressed 1 to 20, and that intended for the FFU PLD 104 as 22 to 30. The number of addresses required will depend on the width of the parallel data bus.

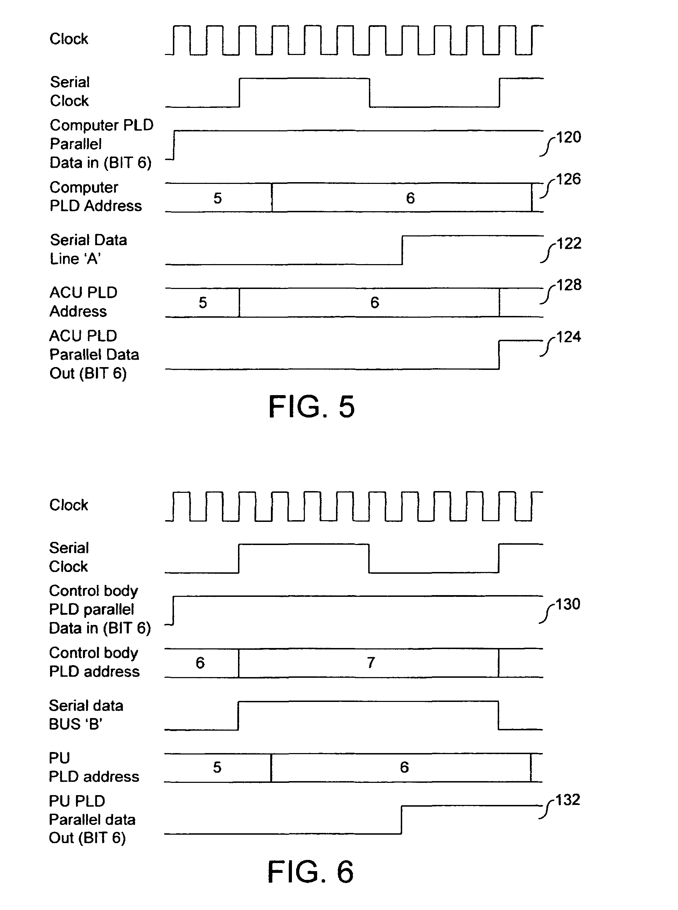

Figure 5 illustrates the transmission of PU PLD parallel data in bit number 6 (labelled as 120) over serial data line 'A'(122) to the ACU PLD 106 for assertion on data bit number 6 (124) of the ACU PLD parallel data out line. The PU PLD input data (120) transitions to "high" at the start of the time interval illustrated. After the PU PLD address counter (126) has incremented to a value of 6 the PU PLD asserts the "high" value of the input data (120) onto serial data line 'A' (122). Because the ACU PLD address counter 128 has also incremented to a value of 6, the input data value 126 is asserted as "high" on the correct ACU PLD parallel data out line 124 towards the end of the illustrated interval.

The serial data value is asserted in the middle of the serial clock period to eliminate potential errors due to delays between the serial clock and serial data inputs. The parallel data out bit assumes the appropriate value on the next rising edge of the serial clock.

As with the parallel data bits input to the PU PLD, each parallel data bit input to the control body PLD 102, the ACU PLD 106 and the FFU PLD 104 is allocated a unique address value. For example, the control body PLD parallel data intended for transmission to the PU PLD 108 could use addresses 1 to 10, while the data from the ACU PLD 106 could use addresses 11 to 30 and the data from the FFU PLD 104 could use addresses 31 to 50.

Figure 6 illustrates transmission of control body PLD parallel data in bit number 6 to the PU PLD 108.

The data in bit 130 transitions from "low" to "high" at the start of the illustrated time interval. The serial clock rising edge causes the address count values to be incremented to a value of 6. The serial data value is read by the PU PLD in the middle of the clock period to eliminate potential timing errors, and a short time thereafter the PU PLD parallel data out bit number 6 (132) assumes the correct value.

The control body PLD, FFU PLD and ACU PLD serial outputs may be set to high impedance to avoid bus contention, when necessary.

Parity control bits may be sent from the ACU PLD, FFU PLD and control body PLD to be compared with corresponding parity bits generated at the PU PLD. If a mismatch is detected then a serial reset is initiated.

A number of variations of the described embodiment will now be outlined. Various combinations of the processing unit, force feedback unit, dummy instrument unit and angulation control unit may be used, and the various units distributed in different ways. For example, the PU may be located in the same base unit as the angulation control unit, or elsewhere, as may the force feedback unit, and dummy instrument control unit as required.

A variety of known devices may be used to carry out the discussed multiplex/demultiplex functions, including programmable logic arrays, microprocessors and dedicated communications elements of various types. The multiplexed communications may be carried over one, two or more common transmission lines with extra protocol lines not being required for some possible arrangements, such as arrangements using twisted pair cabling. Fibre optic links could also be used.

A variety of different combinations of controls and corresponding electrical devices may be provided on the control body.

## Claims

1. An endoscopy training simulator comprising:
an endoscope control body, the control body including a plurality of control body electrical devices;
a base unit; and
an umbilical for carrying services between the control body and the base unit, said services including a plurality of data connections with said electrical devices,
**characterised in that** said data connections are multiplexed over one or more shared transmission lines.

2. The simulator of claim 1 wherein the control body comprises a control body multiplex element arranged to receiver data from the control body electrical devices and to transmit said data multiplexed over the one or more shared transmission lines.

3. The simulator of any preceding claim wherein said control body includes a dummy suction valve, and said control body electrical devices include a dummy suction valve switch.

4. The simulator of any preceding claim wherein said control body includes a dummy air/water valve, and said control body electrical devices include a dummy air/water valve switch.

5. The simulator of any preceding claim wherein said control body includes an instrument insertion port for accepting a dummy instrument for disposal along the insertion tube, and said control body electrical devices include an instrument insertion position sensor.

6. The simulator of any preceding claim further comprising a processing unit, the processing unit including a processing unit multiplex element arranged to receive the multiplexed data from the control body and to demultiplex the data for further use.

7. The simulator of any preceding claim wherein said umbilical is removably attachable to said base unit.

8. The simulator of any preceding claim wherein the control body includes angulation control means communicating with the base unit by physical displacement of control wires passing along the umbilical.

9. The simulator of claim 8 wherein the base unit comprises an angulation control unit adapted to sense and provide force feedback to the physical displacement of the control wires, the angulation control unit comprising an angulation control unit multiplex element for sending and receiving data multiplexed over one or more shared transmission lines.

10. The simulator of claim 9 wherein said umbilical is fixedly attached to said angulation control unit, and said angulation control unit is removeably comprised in said base unit.

11. The simulator of any preceding claim wherein the control body includes an air vent in communication with the base unit by means of an air tube passing along the umbilical.

12. The simulator of any preceding claim wherein said multiplex elements are programmable logic devices.

13. The simulator of any preceding claim wherein said one or more shared transmission lines comprise one or more serial data lines.

14. A control body for an endoscopy training simulator, comprising:
a dummy fluid control for the simulation of controlling a fluid flow along a dummy insertion tube attached to the control body; and
a non-contact electrical sensor arranged to detect an action of the dummy fluid control.

15. The control body of claim 14 wherein the non-contact electrical sensor is a Hall effect sensor.

16. The control body of claim 15 wherein the Hall effect sensor is arranged to respond to the proximity of a magnet moveable by the action of the dummy fluid control.

17. The control body of any of claims 14 to 16 wherein the dummy fluid control is one of a dummy suction control and a dummy air/water control.

18. An endoscopy training simulator comprising a control body as set out in any of claims 14 to 17.
